Europäisches Patentamt

European Patent Office

Office européen des brevets

(11) Publication number: **0 391 726**
**A2**

# EUROPEAN PATENT APPLICATION

(21) Application number: 90303702.6

(22) Date of filing: 06.04.90

(51) Int. Cl.5: **B01D 39/14, B32B 5/08,**
**A41D 13/00**

(30) Priority: 07.04.89 US 335078

(43) Date of publication of application:
**10.10.90 Bulletin 90/41**

(84) Designated Contracting States:
**AT BE CH DE ES FR GB IT LI LU NL SE**

(71) Applicant: **JOHNSON & JOHNSON MEDICAL, INC.**
**One Johnson & Johnson Plaza**
**New Brunswick, New Jersey 08933(US)**

(72) Inventor: **Singer, Wayne Jay**
**6711 Potomac Parkway**
**Arlington, Texas 76017(US)**

(74) Representative: **Mercer, Christopher Paul et al**
**Carpmaels & Ransford 43, Bloomsbury**
**Square**
**London WC1A 2RA(GB)**

(54) **Improved filtration medium and face mask containing the same.**

(57) Improved filtration medium comprises at least two individual, separate and distinct layers of melt blown fibers, the layers being arranged in face-to-face contact. The two-layered filtration medium has better particulate filtration efficiency (for particles 0.8 micron in diameter and larger) than that provided by a single layer of the same melt blown fibers having a basis weight equivalent to the combined basis weight of the two individual layers. The improved filtration medium is useful in the manufacture of face masks, especially face masks for medical or surgical use.

EP 0 391 726 A2

## IMPROVED FILTRATION MEDIUM AND FACE MASK CONTAINING THE SAME

Field of the Invention

The invention relates generally to an improved filtration medium and to face masks containing the same. More particularly, the invention relates to a filtration medium which has improved particulate filtration efficiency and which is especially useful for making face masks for surgical and medical use.

Background of the Invention

Surgical face masks are routinely employed by the operating staff during the course of surgical procedures. The purpose of the face mask has traditionally been to prevent bacteria exhaled by the surgeon, or other members of the operating room staff, from contaminating the patient undergoing surgery. These face masks comprise a filtration medium having first and second major surfaces, an inner facing layer which covers one major surface of the filtration medium and an outer facing layer which covers the other major surface of the filtration medium. In the finished face mask, the filtration medium and the inner and outer facing layers are coextensive in length and width. The face masks are usually provided with bindings along their top and bottom edges and their side edges. In some instances, the top and bottom edges are extended to provide tie strings, while in other cases the side bindings are extended for the same purpose. In addition, face masks often are provided with a "nose clip" along or adjacent their upper edge. This nose clip comprises a piece of malleable material such as aluminum which can be deformed to fit across the bridge of the wearer's nose and help keep the mask in place.

The filtration medium has a pore size which is sufficiently small to prevent bacteria from flowing through the mask. Bacteria, in general, have diameters on the order of from 1-5 microns. Heretofore, fiberglass mats were used as the filter medium but more recently the filter medium has comprised a web of generally discontinuous, small diameter polypropylene fibers made by what is known in the industry as a melt blowing process.

In recent times lasers have been employed in surgery to precisely excise tissue, e.g. a tumor, by vaporizing it, a process sometimes referred to as "photoablation". The photoablation process produces "smoke" or "plume" which comprises not only water vapor but also particulate matter, e.g. tissue fragments, whose diameter is considerably smaller than that of bacteria. It is known that those tissue fragments may carry intact viruses and so it has been suggested that laser plume be regarded as potentially infectious. In view of the foregoing, it is desirable that the filtration medium used in surgical face masks be capable of filtering out particles whose diameters are considerably smaller than the diameters of bacteria.

Summary of the Invention

In accordance with one aspect of the present invention, there is provided an improved filtration medium which is capable of filtering particulate matter having diameters as low as 0.8 micron. It has now been found that a filtration medium comprising at least two individual, initially separate and distinct fibrous layers of melt blown thermoplastic fibers placed in face-to-face, contacting relationship has a better filtration efficiency for particulate matter having diameters as low as 0.8 micron than a filtration medium comprising a single layer of melt blown thermoplastic fibers having a basis weight equivalent to the total basis weight of said individual layers. The individual fibrous layers comprising the filtration medium of the present invention may be readily peeled apart from one another since they are held in their face-to-face, contacting relationship by frictional engagement of their fibers. When the filtration medium is used in face masks, the said individual fibrous layers, even though bound together at their top, bottom and side edges, are free to move with respect to one another in response to the inhaling of air and the exhaling of breath. The thermoplastic fibers may be derived from polypropylene or nylon but polypropylene is preferred because of its lower cost and because more is known about the technology used for producing polypropylene melt blown webs than that used for producing melt blown webs from nylon. The weight of the individual layers of melt blown fibers comprising the improved filtration medium of the present invention may range from about 0.2 ounce/yd$^2$ to about 0.8 ounce/yd$^2$ so as to give total weights of at least 0.4 ounce/yd$^2$ to 1.6 ounce/yd$^2$. The weight of the individual melt blown fibrous layers may be the same or different but it is preferred, for ease of production, that the individual fibrous layers have substantially the same weight. For example, the improved filtration medium of the present invention may comprise, in one embodiment, two individual melt blown fibrous layers each having a basis weight of 0.4 ounce/yd$^2$ or it may comprise, in another embodiment, a first fibrous layer whose basis weight is 0.5 ounce/yd$^2$ and a second fibrous layer whose basis weight is 0.3 ounce/yd$^2$, the basis weight of the two-layer filtration medium being 0.8 ounce/yd$^2$ in both embodiments.

In accordance with another aspect of the present invention, there is provided a surgical face mask comprising the aforementioned filtration medium covered on one side by an inner, air permeable facing layer and on the other side by an outer air permeable facing layer. The inner facing layer is that layer of the face mask which contacts the face of the wearer when the mask is in use. The inner and outer layers are readily permeable to air so as not to interfere with the normal breathing process but they do not make any substantial contribution to the particulate filtration efficiency of the mask. The face mask is bound with woven tapes or the like at its upper, lower, and opposed side edges and may be provided, if desired, with the nose clip of the kind mentioned earlier herein. The side bindings of the mask are preferably extended from both the top edge and bottom edge of the mask to provide tie strings for securing the mask over the face of the wearer.

The melt blown fibrous layers comprising the improved filtration medium of the present invention are made, as indicated earlier herein, by a melt blowing process which is known per se in the art. In brief, melt blown fibrous webs are prepared by extruding a molten thermoplastic polymer, such as molten polypropylene, through a multi-orifice die and collecting the extruded thermoplastic filaments or strands on a foraminous collecting surface. The extrusion die is placed at a distance, e.g. 12 inches, from the collecting surface and a high velocity gas, usually air, is used to attenuate the extruded molten filaments or strands exiting the die and break them into discontinuous fibers of small diameter.

These discontinuous fibers, sometimes called "microfibers", are collected in the form of a fibrous layer or web which is often referred to as a "melt blown layer" or "melt blown web". The microfibers in such layers or webs have diameters ranging up to about 10 microns, with the average diameter of the fibers ranging from about 2 to about 6 microns. The microfibers are predominantly discontinuous and generally have lengths, e.g. about 3 to 5 inches, which exceed those normally associated with staple fibers. A melt blowing process is disclosed in an article entitled "Superfine Thermoplastic Fibers" appearing in Industrial & Engineering Chemisty, Vol. 48, No. 8, (1956) at pages 1342-1346. Other melt blowing processes are disclosed in U.S. Patent No. 3,849,241 and the several patents and related publications mentioned therein.

Brief Description of the Drawings

The invention will be better understood with reference to the appended drawings in which:

FIGURE 1 is a cross-sectional view of a filtration medium comprising a single layer of melt blown thermoplastic fibers having a basis weight of x ounce/yd$^2$;

FIGURE 2 is a cross-sectional view of a filtration medium comprising a single layer of melt blown thermoplastic fibers having a basis weight of 2x ounce/yd$^2$;

FIGURE 3 is a cross-sectional view of a filtration medium in accordance with the present invention and comprising two individual layers of melt blown thermoplastic fibers each of which layers has a basis weight of x ounce/yd$^2$, the total basis weight of said two-layered filtration medium being 2x ounce/yd$^2$; and

FIGURE 4 is a perspective view of a surgical face mask comprising the two-layered filtration medium of the present invention.

Detailed Description of the Invention

Example 1

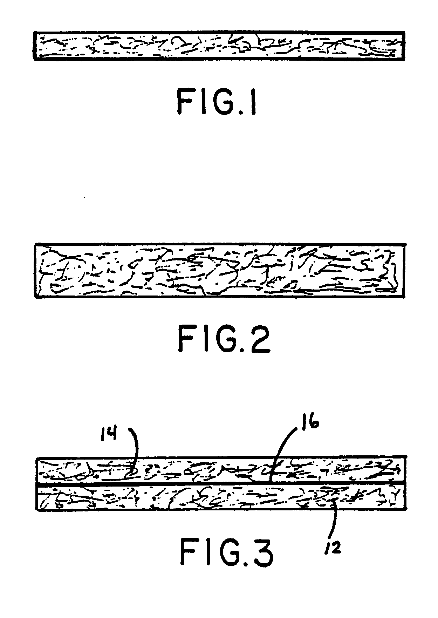

A first layer of melt blown polypropylene fibers having a basis weight of 0.6 ounce/yd$^2$ was prepared using a melt blowing process. The diameters of the polypropylene fibers ranged from 2.5 microns to 5.5 microns; the average diameter of the fibers was 4.2 microns. The fibers ranged from about 3 inches to about 5 inches in length. A test sample measuring 10 inches long (parallel to the machine direction of the fibrous layer) by $7\frac{1}{2}$ inches wide was cut from this first fibrous layer, labelled as Sample A, and set aside for particulate filtration efficiency testing. Sample A is illustrated in FIG. 2 of the drawings.

A second layer of melt blown polypropylene fibers having a basis weight of 0.3 ounce/yd² was prepared. The diameters of the polypropylene fibers of this web also ranged from about 2.5 to about 5.5 microns and the average diameter of the fibers was 4.2 microns. The fibers ranged in length from about 3 to about 5 inches. A test sample measuring about 10 inches in length (parallel to the machine direction of the fibrous layer) and about 7½ inches wide was cut from this second fibrous layer, labelled Sample B, and set aside for testing. Sample B is illustrated in FIG. 1 of the drawings. Two pieces 12,14, each about 10 inches in length (parallel to the machine direction of the fibrous layer) and 7½ inches wide, were cut from this second fibrous layer and placed one on top of the other in face-to-face contact, labelled as Sample C, and set aside for testing of particulate filtration efficiency. Sample C is illustrated in FIG. 3 of the drawings where it will be seen that the two individual pieces 12, 14 of the second fibrous layer are in face-to-face relationship along a plane of contact 16.

Particulate filtration efficiency (PFE) was determined by using the test apparatus and procedure disclosed in U.S. Patent 4,382,378, the teachings of which are incorporated herein by reference. In summary, this test procedure employs a combination of water and particulate matter to challenge the filtration medium and determine its particulate filtration efficiency. The test projects an aerosol of latex comprising polymer particles in water, in a dilute air stream through the filtration medium to be tested and then to an optical particle counter to count the particles that have penetrated the filtration medium. Before the air stream is directed to the particle counter, the water in the system is evaporated and removed from the air stream. The particle counter therefore counts only the solidified latex particles that have penetrated the filtration medium. In this type of test, the filtration medium is challenged by a combination of liquid and solid components which are said to more accurately duplicate breath exhaled through the nose and mouth of the wearer of the mask. The latex particles in their dried state are substantially spherical in configuration and have a diameter of approximately 0.8 micron. The amount of solidified latex particles reaching the particle counter with no test sample mounted in the test device is used as a control. % PFE is determined by the following equation:

$$\% \ PFE = \frac{Particles \ (Control) - Particles \ (Test)}{Particles \ (Control)} \times 100$$

Samples A, B and C were tested for their particulate filtration efficiency using the above-described test. The results of the test were as follows:

| Sample | Construction of Filtration Medium | Particulate Filtration Efficiency* |
|--------|-----------------------------------|-----------------------------------|
| A | Single layer- Basis weight of 0.6 ounce/yd² | 90.7% |
| B | Single layer- Basis weight of 0.3 ounce/yd² | 76.7% |
| C | Two layers- Basis weight of each layer 0.3 ounce/yd²; total basis weight 0.6/yd² | 98.7% |

* For particle size 0.8 micron and larger

From the above test results, it is seen that the filtration medium comprising the single layer of melt blown polypropylene fibers having a basis weight of 0.3 ounce/yd² (Sample B) gave a particulate filtration efficiency (PFE) of 76.7%. Sample A, in which the filtration medium was a single layer of melt blown polypropylene fibers, had a PFE of 90.7%, which was higher than the 76.7% PFE of Sample B. This result was expected in view of the fact that the basis weight of Sample A (0.6 ounce/yd²) was twice the basis weight of Sample B. Unexpectedly, however, it was found that the filtration medium comprising the two individual layers of melt blown polypropylene fibers and having a total basis weight of 0.6 ounce/yd² (Sample C) had a significantly better PFE than a single layer of identical polypropylene fibers of identical basis weight (Sample A).

Example 2

4

A first layer of melt blown polypropylene fibers having a basis weight of 1.2 ounces/yd$^2$ was prepared using a melt blowing process. The diameters of the polypropylene fibers ranged from 2.5 microns to 5.5 microns and the average fiber diameter was 4.2 microns. The fibers ranged from about 3 inches to about 5 inches in length.

A test sample measuring 10 inches long by 7 1/2 inches wide was cut from this first web, labelled as Sample D, and set aside for particulate filtration efficiency testing. Sample D is illustrated in FIG. 2.

A second layer of melt blown polypropylene fibers having a basis weight of 0.6 ounce/yd$^2$ was prepared. The diameters of the polypropylene fibers of this web ranged from about 2.5 microns to about 5.5 microns. The average diameter of the fibers was 4.2 microns and they ranged in length from about 3 to about 5 inches. A test sample measuring about 10 inches in length and about 7 1/2" wide was cut from this second web, labelled Sample E, and set aside for testing. Sample E is illustrated generally in FIG. 1 of the drawings. Two pieces, each about 10 inches in length and 7 1/2 inches wide, were cut from this second layer and placed one on top of the other in face-to-face contact, labelled as Sample F, and set aside for testing of particulate filtration efficiency. Sample F has the two-layer construction illustrated generally in FIG. 3 of the drawings.

Samples D, E and F were then tested for their particulate filtration efficiency according to the test procedure set forth in preceding Example 1.

The results of the test were as follows:

| Sample | Construction | Particulate Filtration Efficiency* |
|---|---|---|
| D | Single layer- Basis weight of 1.2 ounces/yd$^2$ | 92.4% |
| E | Single layer- Basis weight of 0.6 ounces/yd$^2$ | 90.7% |
| F | Two layers- Basis weight of each layer 0.6 ounces/yd$^2$; total Basis weight 1.2 ounce/yd$^2$ | 99.7% |

* For particle size 0.8 micron and larger

From the above test results, it was observed that the filtration medium comprising the single layer of melt blown polypropylene fibers having a basis weight of 0.6 ounce/yd$^2$ (Sample E) gave a particulate filtration efficiency (PFE) of 90.7%. Sample D, in which the filtration medium was a single layer of melt blown polypropylene fibers, had a PFE of 92.4%. This result was expected in view of the fact that the basis weight of Sample D (1.2 ounce/yd$^2$) was twice the basis weight of Sample E. Unexpectedly, however, it was found that the filtration medium comprising the two individual layers of melt blown polypropylene fibers and having a total basis weight of 1.2 ounce/yd$^2$ (Sample F) had a better PFE (99.7%) than a single layer of substantially identical polypropylene fibers of identical basis weight (Sample D).

A surgical face mask comprising the two-layer filtration medium in accordance with the teaching of the present invention (i.e. Sample C of Example 1 hereof and Sample F of Example 2 hereof) can be made by superposing a first highly air permeable facing layer on one of the major surfaces of the filtration medium and superposing a second highly air permeable facing layer on the other of its major surfaces. Nonwoven fabrics are well-known in the art as suitable materials from which to construct the first and second facing fabrics.

Bindings derived from lengths of woven or nonwoven tapes are then attached, e.g. by sewing or equivalent means, to the upper, lower and side edges of the above-described facing layer/filtration medium/facing layer combination. The side bindings may be extended in known fashion to provide the strings with which to hold the mask over the mouth and nose of the wearer. A "noseclip" in the form of a strip or wire of malleable material such as aluminum may be affixed adjacent the upper edge of the mask. The face mask may further comprise an air impervious element secured in flap-like fashion to its upper outer surface as disclosed in U.S. Patent No. 3,888,246. The purpose of such air impervious element is to help prevent fogging of eyewear during use of the mask. If desired, the filtration medium with its two superposed facing layers may be folded into a pleated configuration prior to the attachment of the aforementioned bindings. The filtration medium of the present invention may be used to construct a wide variety of face masks among which are those described in U.S. Patent Nos. 3,888,246; 3,971,369; 3,890,966; and 4,300,549; the teachings of all of which patents are incorporated herein by reference.

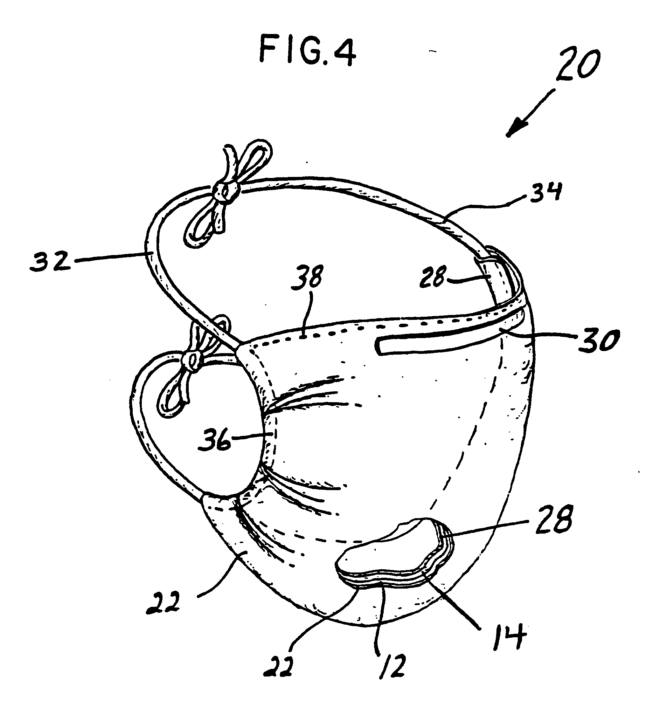

A surgical face mask 20 comprising the filtration medium of the present invention is illustrated in FIG. 4 of the drawings. Face mask 20 has an air permeable outer facing layer 22 and an air permeable inner, face-contacting layer 28. The two-ply filtration medium of the invention, which comprises a first layer 12 of melt blown fibers and a second layer 14 of melt blown fibers in face-to-face contact, is located between the inner and outer facing layers. The mask has a nose clip 30. Tie strings 32,34 are threaded into channels formed by folding over the side edges of the mask and stitching them as illustrated at 36. The upper and lower edges of the mask can be stitched, as at 38, to avoid fraying at those locations. It will be understood that, except where they are stitched at the top, bottom and sides of the mask, the fibrous layers 12, 14 are held in their face-to-face, contacting relationship only by frictional engagement of their fibers. As a result, the two layers may move with respect to one another during the breathing process.

## Claims

1. A filtration medium comprising:
a first layer of melt blown thermoplastic fibers, said first layer having first and second major surfaces; and
a second layer of melt blown thermoplastic fibers, said second layer having first and second major surfaces, wherein the first major surface of said first layer is in face-to-face contact with the first major surface of said second layer.

2. The filtration medium of claim 1, wherein the melt blown thermoplastic fibers in said first and second layers have diameters ranging up to about 10 $\mu$m.

3. The filtration medium of claim 1 or claim 2, wherein the melt blown thermoplastic fibers in said first and second layers have diameters ranging from 2 $\mu$m to 6 $\mu$m.

4. The filtration medium of any one of claims 1 to 3 wherein said melt blown thermoplastic fibers have lengths ranging from 7.62 to 12.6 cm.

5. The filtration medium of any one of claims 1 to 4 wherein said melt blown thermoplastic fibers are derived from polypropylene.

6. The filtration medium of any one of claims 1 to 5 wherein the melt blown fibers comprising said first and second layers are polypropylene fibers which have diameters ranging from 2.5 $\mu$m to 5.5 $\mu$m and lengths ranging from 7.62 to 12.7 cm.

7. A face mask comprising:

a first air permeable layer;
a second air permeable layer; and
a layer of filtration medium according to any one of claims 1 to 6,
wherein the second major surface of said first layer of fibers is covered by said first air permeable layer and the second major surface of said second layer of fibers is covered by said second air permeable layer.

FIG.1

FIG.2

FIG.3

# FIG.4